# EUROPEAN PATENT APPLICATION

(11) **EP 4 733 647 A1**
(43) Date of publication of application: **29.04.2026**
(21) Application number: 24208703.9
(22) Date of filing: 24.10.2024
(51) Int. Cl.: F16L 25/00

(54) **CONNECTOR WITH A FLUID MODULE**

(71) Applicant: Aptiv Technologies AG, 8200 Schaffhausen (CH)
(72) Inventor: MOORTHY, Vijay Babu, 8200 Schaffhausen (CH); GOMEZ, Ricardo J., 8200 Schaffhausen (CH)
(74) Representative: Bardehle Pagenberg Partnerschaft mbB Patentanwälte Rechtsanwälte

(57) **Abstract**

The present disclosure relates to a connector for automotive applications, in particular a door-to-body (DTB) connector, the connector comprising: a connector housing; a fluid module adapted to be mounted inside the housing, wherein the fluid module is adapted to guide fluid and comprises: a first protrusion adapted to engage with a first slot of the housing for guiding the module on a predefined path in the housing; a second protrusion adapted to engage with a second slot of the housing for pivoting the module, wherein, when the module is at least partially received in the housing, the housing and the module are adapted such that the module can be mounted inside the housing by rotating the module around the second protrusion.

## Description

### 1. Field of the invention

The present disclosure relates to a connector for automotive applications, specifically a door-to-body (DTB) connector. The connector includes a housing, and a fluid module designed for guiding fluid. The present disclosure also relates to a respective method.

### 2. Background

In the field of automotive connection systems, it is common to use connector systems to establish reliable electrical and fluid connections between various components. These connector systems are crucial for ensuring the proper functioning of electrical circuits and fluid circuits within vehicles, which include but are not limited to power distribution, signal transmission, and data communication.

In the field of automotive electrical connectors, particularly Door-to-Body (DTB) connectors, the integration of fluid and air modules has traditionally been a challenging task. Existing designs typically position fluid systems outside the door connector, which can lead to inefficiencies in space utilization.

One common approach in the prior art involves a two-step locking mechanism for securing the fluid and air module within the DTB connector. The two-step locking mechanism generally involves locking in the Y direction as the first step and locking in the Z direction as the second step. While this method provides a secure attachment, it has several notable deficiencies. The two-step process requires more space for mounting, making it difficult to achieve a compact package size. This is particularly problematic in automotive applications where space is at a premium. Additionally, the assembly process is more complex and time-consuming, requiring precise alignment and multiple steps to secure the module.

Another issue with the two-step locking mechanism is the uneven force distribution during mating with the counterpart, which can affect the reliability and durability of the connection. The overall weight of the connector is also increased due to the additional components and space required for the two-step locking mechanism. Furthermore, the package size often exceeds the cutout size defined by car makers, making it incompatible with certain design specifications. The design may also be very case specific and, hence, limited in its applicability.

These deficiencies highlight the need for a more efficient and compact solution for integrating fluid and air modules within connectors, specifically DTB connectors.

It is therefore a technical problem underlying the present invention to provide an improved connector for automotive applications that at least partially overcomes the disadvantages of known systems. It is also a problem to provide a housing and a fluid module.

### 3. Summary of the invention

The above-mentioned objects are at least partially achieved by the subject-matter of the independent claims. Preferred embodiments are subject of the dependent claims, and the skilled person finds hints for other suitable aspects of the present invention through the overall disclosure of the present application.

In particular, this object is addressed by a connector for automotive applications, in particular a door-to-body (DTB) connector, the connector comprising: a connector housing; a fluid module adapted to be mounted inside the housing, wherein the fluid module is adapted to guide fluid and comprises: a first protrusion adapted to engage with a first slot of the housing for guiding the module on a predefined path in the housing; a second protrusion adapted to engage with a second slot of the housing for pivoting the module, wherein, when the module is at least partially received in the housing, the housing and the module are adapted such that the module can be mounted inside the housing by rotating the module around the second protrusion.

In this manner, the present invention offers several advantages over prior art. Firstly, the integration of the fluid module within the connector, specifically the door-to-body (DTB) connector using protrusions and slots for rotational mounting allows for a substantially reduced package size. Thereby, it serves to meet stringent requirements for space efficiency. This compact design may be attributable to minimum clearance during the rotational mounting process, ensuring a secure and precise fit. Additionally, the slots and protrusions provide enhanced alignment and stability, facilitating ease of assembly and reducing the risk of misalignment.

The force distribution during mounting is optimized, resulting in improved mechanical performance and durability. Furthermore, the design is compatible with a defined cutout size of the connector. This may offer versatility and potential applicability across various original equipment manufacturers.

The fluid module may guide any kind of fluid including but not limited to air, liquid, or the like.

The fluid module is engineered to guide fluid and features a first protrusion that engages with a first slot in the housing, facilitating the module's guidance along a predefined path within the housing. This may ensure precise alignment and secure placement of the fluid module, which may help in extending the operational life of the connector by reducing wear and tear due to misalignment.

Additionally, the fluid module includes a second protrusion that engages with a second slot in the housing, allowing the module to pivot. However, the second slot may offer more than just pivoting capability. This pivoting capability is helpful for the ease of installation and removal of the fluid module, potentially addressing the challenge of maintaining or replacing the module in confined automotive spaces.

When the module is at least partially received in the housing, the design of the housing and module permits the module to be mounted by rotating it around the second protrusion. This rotational mounting mechanism may provide a more accurate and secure fit, reducing the likelihood of fluid leakage and enhancing the overall reliability of the connector. The specific arrangement of the protrusions and slots ensures that the fluid module is both guided and pivoted in a controlled manner, which may improve the efficiency of the assembly process and reduce the risk of damage during installation. This design may also address the challenge of ensuring a robust fluid connection in dynamic automotive environments, where vibrations and movements are common. By allowing the module to rotate into place, the connector may offer a more user-friendly and time-efficient solution for automotive fluid connections.

In particular, the rotational mounting mechanism simplifies the installation process, ensuring that the module can be securely and accurately positioned within the housing, thereby enhancing the overall reliability and functionality of the connector in automotive applications.

It is noted that when the module is mounted to the housing, it remains securely fixed within the housing, preventing any unintended rotational movement and translational movement. Though it is to be noted that the module may be releasably mounted to the housing, such that it could be removed therefrom again without necessitating destruction of the connector.

According to an embodiment, the first slot comprises a curved path for guiding the first protrusion.

This feature introduces a specific mechanism of communication between the first protrusion of the fluid module and the first slot of the housing. The curved path within the first slot is designed to interact with the first protrusion in a manner that facilitates a more controlled and precise movement of the fluid module as it is guided along a predefined path within the housing.

The curvature of the path ensures that the first protrusion follows a specific trajectory, which can enhance the stability and alignment of the fluid module during the assembly process. This controlled guidance is particularly beneficial in automotive applications where precision and reliability are paramount.

The introduction of a curved path for the first slot brings several advantages. Firstly, it allows for smoother and more predictable movement of the fluid module, reducing the risk of misalignment or improper engagement with other components within the housing. Secondly, the curved path can help in distributing the mechanical stresses more evenly along the path, potentially increasing the durability and lifespan of both the first protrusion and the first slot. Thirdly, the curvature can be designed to accommodate specific spatial constraints within the housing, optimizing the use of available space and potentially allowing for a more compact connector design. Additionally, the curved path can facilitate easier assembly and disassembly of the fluid module, as the predefined trajectory can guide the module into its correct position with minimal manual adjustment. Overall, the inclusion of a curved path in the first slot for guiding the first protrusion enhances the functionality, reliability, and efficiency of the connector, making it better suited for the demanding requirements of automotive applications.

According to a further embodiment, the first slot is arranged around the periphery of the second slot.

Thereby a spatial relationship between the guiding and pivoting mechanisms of the fluid module within the connector housing may be introduced. This arrangement facilitates a more compact and efficient design by ensuring that the guiding and pivoting actions are closely coordinated. The first slot, being peripheral to the second slot, allows the first protrusion to engage in a manner that ensures precise linear guidance along a predefined path, while the second protrusion may essentially simultaneously engage the second slot to enable pivotal movement. As stated elsewhere herein, the second protrusion usually engages with the housing after the first protrusion engages with the housing.

This dual engagement mechanism ensures that the fluid module can be accurately positioned and securely mounted within the housing, enhancing the overall stability and reliability of the connector. The peripheral arrangement of the first slot around the second slot also simplifies the assembly process, as it allows for a more intuitive and streamlined insertion and rotation of the fluid module. This design minimizes the risk of misalignment or improper installation, which can be critical in automotive applications where precision and durability are paramount. Additionally, this configuration can potentially reduce the overall footprint of the connector housing, contributing to space-saving in automotive design where compactness is often a significant consideration.

By integrating the guiding and pivoting functions in such a closely related manner, the connector can achieve a higher degree of mechanical efficiency, reducing wear and tear on the components and extending the operational lifespan of the connector. The specific arrangement of the slots also provides a clear pathway for the fluid module to follow, which can enhance the fluid guiding capabilities of the module by ensuring that it remains correctly oriented and securely positioned within the housing. This can be particularly beneficial in maintaining the integrity of fluid pathways and preventing leaks or blockages.

This feature in combination with the one of the preceding embodiment can also contribute to reducing assembly time and labor costs, as well as minimizing the likelihood of assembly errors.

According to a further embodiment, the second slot comprises a pivot portion, wherein the module is adapted such that, when the second protrusion is received in the pivot portion, the module can be rotated around the pivot portion such that the module can be mounted inside the housing.

The inclusion of a pivot portion in the second slot enhances the functionality of the connector by providing an essentially defined axis around which the fluid module can rotate. This rotational capability is helpful for the proper mounting of the module inside the housing. When the second protrusion of the fluid module is received in the pivot portion, the module is adapted to rotate around this pivot point. This rotational movement allows the module to be mounted inside the housing in a controlled and precise manner. The pivot portion thus acts as a fulcrum, enabling the fluid module to pivot into its designated position within the housing.

This feature brings several advantages to the connector assembly. Firstly, it simplifies the installation process by allowing the module to be inserted and then rotated into place, rather than requiring a direct linear insertion which might be more cumbersome or less accurate. Secondly, the pivoting action ensures that the module is securely and accurately positioned within the housing, reducing the risk of misalignment or improper installation. This is important in automotive applications where precision and reliability are critical. Additionally, the ability to pivot the module into place can help in accommodating various design constraints and spatial limitations within the vehicle's architecture. By allowing the module to be mounted through a combination of insertion and rotation, the design provides greater flexibility in terms of assembly and integration into the vehicle's systems. Furthermore, this feature can enhance the durability and longevity of the connector by ensuring that the module is consistently and correctly positioned, thereby reducing wear and tear that might result from improper alignment.

According to a further embodiment, the first slot and the second slot are configured to rotationally lock the fluid and air module within the housing.

This means that the module is essentially locked, i.e., against translational movements, while it is still able to be rotated.

The rotational locking feature provided by the configuration of these slots enhances the stability and reliability of the module's positioning within the housing. This is particularly helpful in automotive applications where vibrations, movements, and external forces are prevalent, and any displacement of the module could lead to malfunction or failure of the fluid guiding system. By ensuring that the module is rotationally locked, the connector design mitigates risks associated with module displacement, thereby improving the overall durability and performance of the connector. Additionally, this feature simplifies the assembly process, as the predefined path and rotational locking mechanism provide clear guidance and a secure fit for the module, reducing the likelihood of assembly errors.

The rotational locking also facilitates maintenance and replacement procedures, as the module can be easily rotated into and out of the locked position without requiring additional securing mechanisms. This embodiment underscores importance of precise alignment and secure positioning in the design of connectors for automotive applications, where reliability and ease of assembly are paramount.

According to a further embodiment, the first slot and the second slot of the housing and the first protrusion and the second protrusion of the module are dimensioned such that the module is brought into a first orientation having an angle before being received in the housing with respect to an angle when mounted of at least 10°, preferably at least 20°, preferably at least 30°, preferably at least 40°, preferably at least 50°; and/or of at most 90°, preferably at most 80°, preferably at most 70°.

The mounted state of the module in the connector may be understood as the second orientation of the module.

This specific dimensional relationship between the slots and protrusions ensures that the fluid module should be angled at a particular angle before it can be properly received and mounted within the housing. This facilitates a guided and controlled insertion process, ensuring that the fluid module is aligned correctly before it is fully engaged within the housing. This reduces the likelihood of improper installation, which could lead to functional issues or damage to the module or housing. Further, the requirement for the module to be oriented at a specific angle before mounting provides a tactile feedback mechanism for the installer, indicating when the module is in the correct position for final installation. This can enhance the ease of assembly and reduce the time required for installation. Additionally, the angular orientation requirement can help in maintaining the integrity of the fluid pathways within the module, ensuring that they are not obstructed or misaligned during installation. This is particularly important for maintaining the performance and reliability of the fluid-guiding function of the module. Furthermore, the specified angular range allows for flexibility in design and manufacturing tolerances, accommodating slight variations in component dimensions while still ensuring proper functionality.

The angle in the first orientation with respect to the second angle (i.e., when mounted) should not be too large and not be too small. A compromise as proposed in here ensures that sufficient inclination is provided at the beginning of the mounting process, while the module does not contact a back surface of the connector housing.

According to a further embodiment, the first slot and the second slot of the housing and the first protrusion and the second protrusion of the module are dimensioned such that the first protrusion engages with the first slot before the second protrusion engages with the second slot, e.g., when the housing receives the module.

Hence, in case the module is not in a correct orientation, the module is rotated first before being received in the housing. This specific mechanism of communication between the components ensures that the module undergoes a rotational movement prior to its complete insertion into the housing. However, as understood, in case the module is already provided in a correct orientation, it does not need to be rotated again.

According to a further embodiment, the module comprises at least one bent fluid pipe having a first pipe portion, a second pipe portion and a bent pipe portion therebetween, wherein the first protrusion is arranged on the first pipe portion and the second protrusion is arranged on the second pipe portion, wherein, when the module is received at least partially in the housing, the first pipe portion is received in the housing before the second pipe portion is received in the housing.

Hence, the first protrusion is engaged with the first slot before the second protrusion is engaged with the second slot.

The bent fluid pipe allows for a more compact and efficient design, facilitating the integration of the fluid module within the constrained space of the automotive connector. The first protrusion is arranged on the first pipe portion and the second protrusion is arranged on the second pipe portion, which provides a structured and reliable method for guiding and pivoting the fluid module within the housing. This arrangement ensures that the module is securely aligned and positioned as it is inserted into the housing.

When the module is received at least partially in the housing, the first pipe portion is received first in the housing such that the first protrusion is engaged with the first slot before the second protrusion is engaged with the second slot. This sequential engagement mechanism allows for a controlled insertion process, reducing the risk of misalignment or damage to the module or housing during assembly.

A bent fluid pipe may be a fluid pipe comprising a bending portion. In this manner, fluid may be guided from one direction to a different direction.

According to a further embodiment, the at least one bent fluid pipe is a first bent fluid pipe, and the module comprises a second bent fluid pipe arranged next to the first bent fluid pipe, wherein the first and the second bent fluid pipe are preferably integrally connected, optionally, wherein the first pipe portion has a smaller free flow passage compared to the second pipe portion.

This configuration allows for parallel fluid pathways, which can enhance the overall fluid handling capacity of the module. The close arrangement of these pipes ensures that the module can manage multiple fluid streams simultaneously, thereby improving the connector's versatility and performance in automotive applications. Additionally, the first and second bent fluid pipes are preferably integrally connected. This integral connection between the two pipes provides a robust and unified structure, reducing potential points of failure and ensuring reliable fluid guidance within the module. The integral connection also simplifies the manufacturing process, as it reduces the number of separate components that need to be assembled.

Optionally, the first pipe portion may have a smaller free flow passage compared to the second pipe portion. This variation in the free flow passage between the two pipe portions allows for differential fluid flow rates, which can be helpful in applications where precise fluid management is required. For instance, a smaller free flow passage in the first pipe portion could be used to restrict fluid flow for certain applications, while the larger free flow passage in the second pipe portion could accommodate higher fluid volumes. This differential flow capability enhances the module's adaptability to various fluid management requirements within automotive systems.

According to a further embodiment, the second slot is substantially straight.

This feature introduces a specific geometric configuration of the second slot, which influences the interaction between the second protrusion of the fluid module and the housing. The straight nature of the second slot ensures a linear path for the second protrusion during the pivoting motion of the fluid module. This linear path facilitates a more predictable and controlled pivoting action, enhancing the ease of assembly and disassembly of the fluid module within the housing.

According to a further embodiment, the first and/or second protrusion of the fluid module is shaped like a pin, which provides a more secure and precise engagement with the corresponding slots in the housing. This pin-shaped design facilitates smoother guidance and pivoting of the module within the housing, ensuring that the fluid module is accurately positioned and securely held in place during both installation and operation.

According to a further embodiment, the fluid module is designed with an L-shaped configuration when viewed from a side perspective. This L-shape not only optimizes the spatial arrangement within the housing, allowing for efficient use of the available space, but also contributes to the structural integrity and stability of the module during its guided movement and pivoting actions.

According to a further embodiment, the module is strategically arranged in the lower part of the connector, which may provide several advantages, including improved weight distribution and easier access for maintenance or replacement. Positioning the module in the lower part of the connector can also enhance the overall balance and stability of the connector assembly, particularly in dynamic automotive environments.

According to a further embodiment, the module protrudes at least partially outwardly from the housing, making it accessible even when mounted. This outward protrusion allows for easier handling, inspection, and maintenance of the fluid module without the need to disassemble the entire connector housing.

According to a further embodiment, the fluid module comprises locking means, preferably a flexible locking snap, for locking the module in the housing.

The locking means, particularly when embodied as a flexible locking snap, provides a reliable and efficient method for securing the fluid module in place once it is positioned within the housing. This mechanism operates by engaging with corresponding structures within the housing, thereby preventing unintended movement or dislodgement of the fluid module during operation or under external forces.

According to a further embodiment, the connector is an electrical connector comprising a terminal portion for electrically connecting one or more terminals.

The terminal portion serves as a critical interface for electrical communication between the automotive components, ensuring that electrical signals or power can be transmitted effectively through the connector. The mechanism of communication between the components involves the terminal portion making physical contact with corresponding terminals within the automotive system, thereby establishing an electrical connection. This connection is facilitated by the precise alignment and secure engagement of the terminals within the terminal portion, ensuring reliable and efficient electrical conductivity.

The inclusion of the terminal portion necessitates that the connector housing and the fluid module are designed to accommodate both fluid guiding and electrical connectivity functions without interference. This dual functionality is provided in here by careful consideration of the spatial arrangement within the housing to prevent any potential short-circuiting or fluid leakage that could compromise the connector's performance. The new feature of the terminal portion brings added versatility to the connector, making it suitable for applications that require both fluid and electrical connections. This is particularly advantageous in modern automotive systems where space and weight constraints demand multifunctional components.

The objects of the present disclosure are also addressed by a fluid module adapted to be mounted inside a housing of a connector, preferably a connector of any one of the embodiments described in here, wherein the fluid module is adapted to guide fluid and comprises: a first protrusion adapted to engage with a first slot of the housing for guiding the module on a predefined path in the housing; a second protrusion adapted to engage with a second slot of the housing for pivoting the module, wherein, when the module is at least partially received in the housing, the module is adapted such that the module can be mounted inside the housing by rotating the module about the second protrusion.

The objects of the present disclosure are also addressed by a housing for a connector, preferably a connector of any one of the embodiments described in here, the housing comprising: a first slot adapted to engage with a first protrusion of a fluid module for guiding the fluid module on a predefined path in the housing; a second slot adapted to engage with a second protrusion of a fluid module for pivoting the fluid module, wherein, when a fluid module is at least partially received in the housing, the housing is adapted such that the fluid module can be mounted inside the housing by rotating the module about the second protrusion.

The objects of the present disclosure are also addressed by a method for assembling a connector for automotive applications according to any one of the embodiments described in here, the method comprising: providing the housing and the fluid module; guiding, preferably by translational movement, the module at least partially into the housing; rotating the module around the second protrusion for mounting the module inside the housing.

The features described with reference to the connector are also applicable to the housing, the module and the method. Same applies to the advantages.

Particularly, it is noted that the method as described herein may include all aspects and/or embodiments described herein, even if not expressly described as a method but rather with reference to the connector. It is also to be understood that the features and advantages described with reference to the connector may equally be applicable to the method as described herein.

### 4. Brief description of preferred embodiments

In the following, preferred embodiments of the disclosure are disclosed by reference to the accompanying figures.
Figure 1: shows an embodiment of a connector with a housing and a fluid module, highlighting the first and second protrusions and slots.
Figure 2: shows the embodiment of Fig. 1 in greater detail when the module is received in the housing.
Figure 3: shows the embodiment of a connector with a fluid module partially received and rotated inside the housing.
Figure 4: shows the embodiment of a connector housing with a fluid module mounted in the housing.
Figure 5: shows Fig. 4 from the bottom and from the side and with the housing partially cut away.
Figure 6: shows an embodiment of a fluid module with protrusions, bent fluid pipes, and locking means.
Figure 7: an embodiment of a prior art connector.
Figure 8: an embodiment of a connector with a fluid module mounted inside the housing.

### 5. Detailed description of preferred embodiments

In the subsequent passages, the invention is described with reference to the accompanying figures in more detail. It is noted that further embodiments are certainly possible, and the below explanations are provided by way of example only, without limitation. Throughout the present figures and specification, the same reference numerals refer to the same elements. The figures may not be to scale, and the relative size, proportions, and depiction of elements in the figures may be exaggerated for clarity, illustration, and convenience.

It is noted that when features, aspects, and/or embodiments are described herein by the term "substantially", manufacturing tolerances must be taken into consideration. In this manner, minor deviations during any kind of manufacturing, assembling or the like may pertain. Further, manufacturing tolerances, aging effects, or other minor defects or the like may pertain. These are all encompassed by the term "substantially". Although not always explicitly expressed by using the term "substantially", it is understood that the elements, parts, units, shapes, and / or the like described herein may nevertheless comprise such manufacturing tolerances.

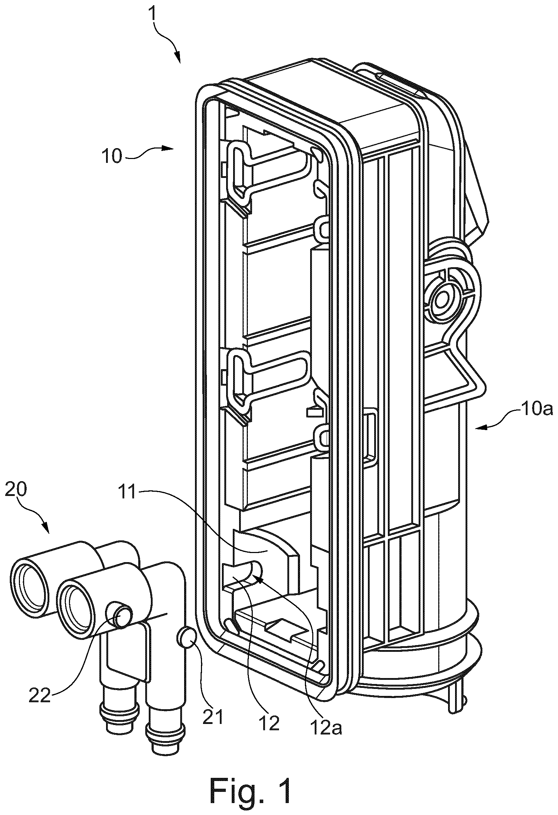

**Figure 1** illustrates an embodiment of a connector 1 for automotive applications, specifically a door-to-body DTB connector. The connector 1 comprises a connector housing 10 and a fluid module 20 designed to be mounted inside the housing 10.

The housing 10 features a first slot 11 and a second slot 12. The first slot 11 is configured to engage with a first protrusion 21 of the fluid module 20, guiding the module on a predefined path within the housing 10. The second slot 12 is configured to engage with a second protrusion 22 of the fluid module 20, allowing the module to pivot. The second slot 12 includes a pivot portion 12a, facilitating the rotational movement of the fluid module 20 around the second protrusion 22 when the module is at least partially received in the housing 10.

The fluid module 20 comprises at least one bent fluid pipe 24, which includes a first pipe portion 23a, a second pipe portion 23c, and a bent pipe portion 23b situated between them. The first protrusion 21 is located on the first pipe portion 23a, while the second protrusion 22 is located on the second pipe portion 23c. When the fluid module 20 is inserted into the housing 10, the first pipe portion 23a is received before the second pipe portion 23c.

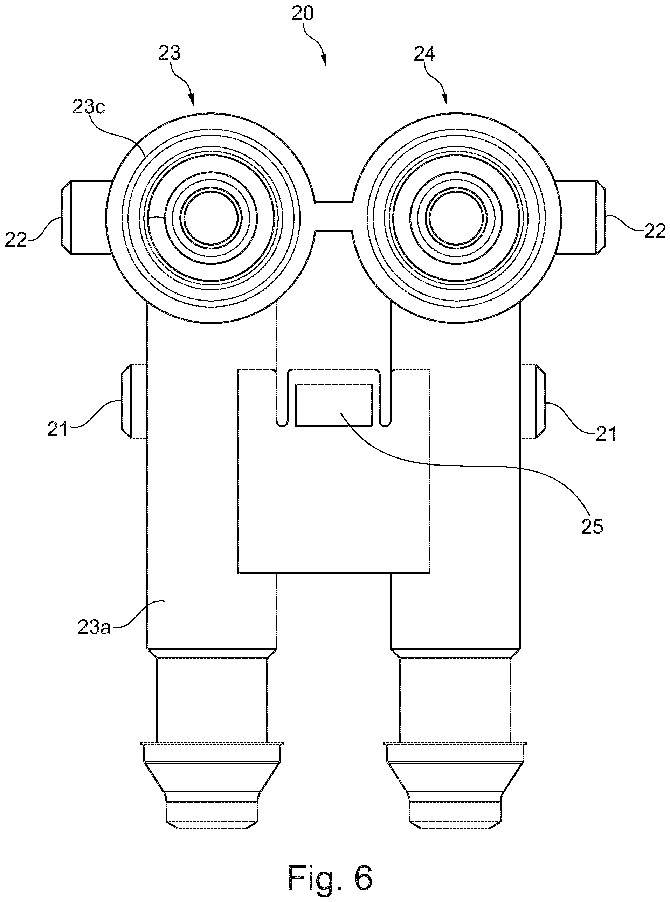

The housing 10 also includes a locking means 25 (Fig. 6), preferably a flexible locking snap, to secure the fluid module 20 within the housing 10. The housing 10a is depicted as a substantially straight structure, providing a clear path for the insertion and rotation of the fluid module 20.

In the embodiment shown, the first slot 11 comprises a curved path, facilitating the guided movement of the first protrusion 21. The first slot 11 is arranged around the periphery of the second slot 12, ensuring that the first protrusion 21 engages with the first slot 11 before the second protrusion 22 engages with the second slot 12. This sequential engagement allows for precise alignment and secure mounting of the fluid module 20 within the housing 10.

The fluid module 20 is designed to guide fluid through the connector 1, making it suitable for various automotive applications. The module's design ensures that it can be mounted inside the housing 10 by rotating around the second protrusion 22, providing a reliable and efficient connection.

Overall, the embodiment depicted in Figure 1 demonstrates the integration of the fluid module 20 within the housing 10, highlighting the precise alignment and secure mounting facilitated by the first and second slots 11, 12, and the corresponding protrusions 21, 22. The inclusion of locking means 25 further ensures the stability and reliability of the connection, making this connector 1 an effective solution for automotive applications.

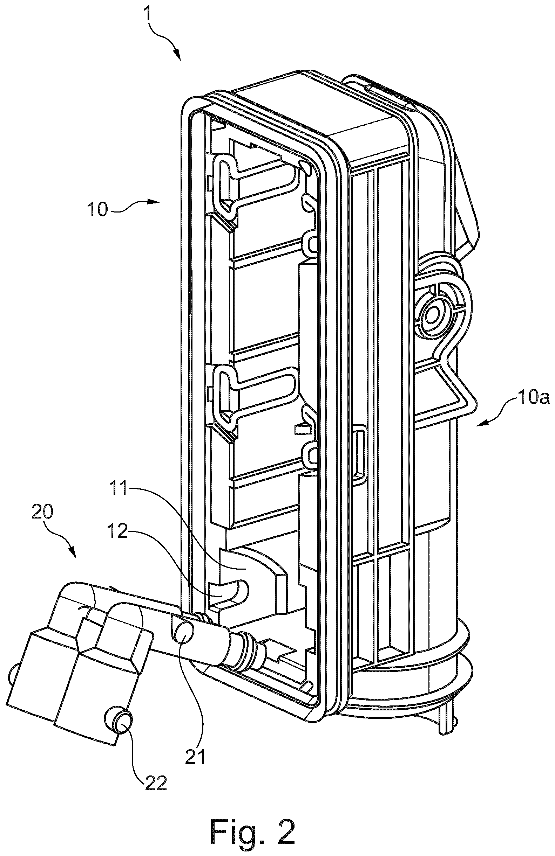

**Figure 2** illustrates the embodiment of a connector 1 of Fig. 1, when the module 20 is rotated into the right orientation, before being received in the housing 1.

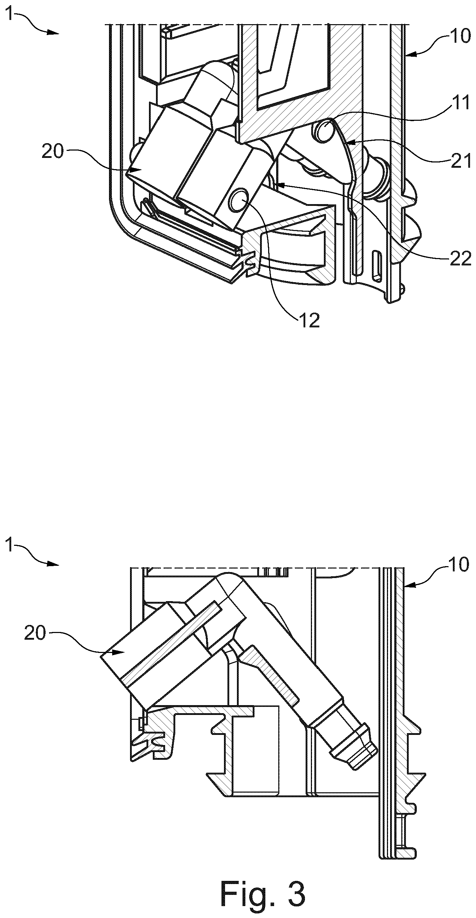

When the fluid module 20 is at least partially received in the housing 10 (not shown in **Fig. 2**, but, e.g., in **Fig. 3**), the module 20 can be mounted inside the housing 10 by rotating around the second protrusion 22. This rotational movement is guided by the engagement of the first protrusion 21 with the first slot 11, which may have a curved path to facilitate this motion.

As can be seen from Fig. 2, the housing 10 and the fluid module 20 are dimensioned such that the module 20 is brought into a first orientation with an angle before being received in the housing 10. This angle can vary, with possible ranges including at least 10°, preferably at least 20°, 30°, 40°, or 50°, and at most 90°, preferably at most 80° or 70°. This angular orientation ensures proper alignment and engagement of the module 20 within the housing 10.

**Figure 3** illustrates the embodiment of a connector 1 for automotive applications, specifically a door-to-body DTB connector.

The upper part of Figure 3 shows the fluid module 20 partially inserted into the housing 10. The first protrusion 21 is engaged with the first slot 11, which guides the module 20 along a specific path. The second protrusion 22 is aligned with the second slot 12, enabling the module 20 to pivot into mounted position. The housing 10 is depicted with its internal structure, showing the slots 11 and 12 that interact with the protrusions 21 and 22 of the module 20.

The lower part of Figure 3 shows the fluid module 20 in a rotated position, further illustrating the pivoting mechanism facilitated by the second protrusion 22 and the second slot 12. However, the module 20 is not yet mounted. The module 20 is shown in a more advanced stage of insertion into the housing 10, demonstrating the rotational movement around the second protrusion 22. This rotation allows the module 20 to be securely mounted within the housing 10.

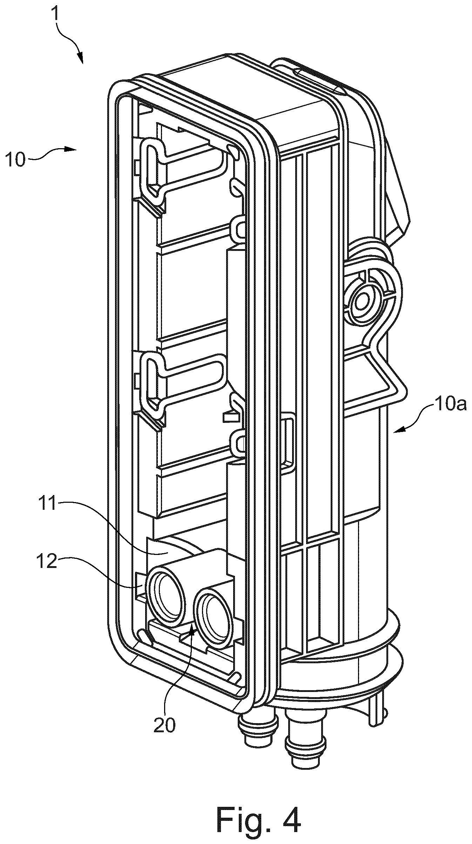

**Figure 4** illustrates the embodiment of a connector 1 for automotive applications, specifically a door-to-body DTB connector. The module 20 is brought into the mounted state with the housing 10.

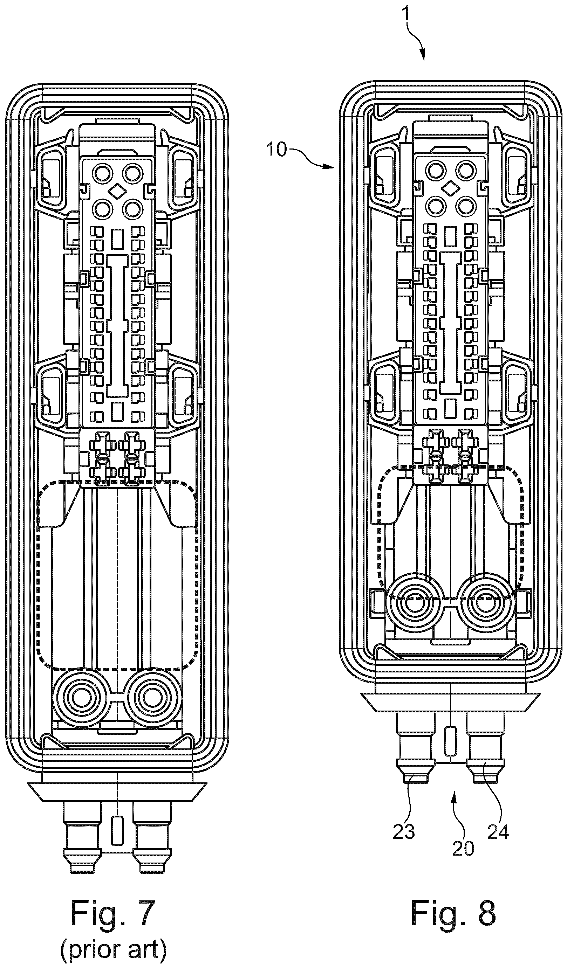

The housing 10 is depicted with its back side 10a. The housing 10 is designed to accommodate the fluid module 20, which is shown partially inserted into the housing 10. The housing 10 may also encompass a terminal (not shown in Fig. 4, but in Fig. 8), in the upper part of the housing in Fig. 4.

The first slot 11 is positioned along the inner surface of the housing 10 and is adapted to engage with a first protrusion (not visible in this figure) of the fluid module 20. This slot 11 facilitates the guided insertion of the fluid module 20 along a predefined path within the housing 10. The second slot 12, located adjacent to the first slot 11, is designed to engage with a second protrusion (also not visible in this figure) of the fluid module 20. This second slot 12 allows for the pivoting of the fluid module 20, enabling it to rotate around the second protrusion during the mounting process.

The fluid module 20 is designed to guide fluid through the connector 1. It includes two visible fluid pipes extending from the bottom of the module 10, indicating the fluid input and output points.

The housing 10's design ensures that the fluid module 20 can be mounted by first engaging the first protrusion with the first slot 11, guiding the module along a curved path. Subsequently, the second protrusion engages with the second slot 12, allowing the module to pivot and rotate into its final position within the housing 10. This rotational mounting mechanism ensures a secure and precise fit of the fluid module 20 within the housing 10.

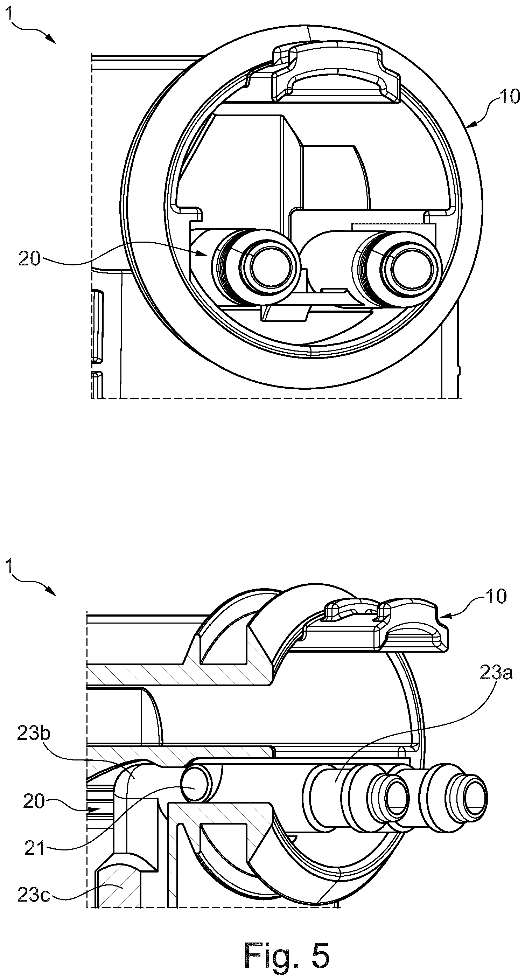

**Figure 5** illustrates the embodiment of a connector 1 for automotive applications from the bottom and partially from a side perspective.

The fluid module 20 is designed to guide fluid and is equipped with at least one bent fluid pipe (two of which are shown) 23 comprising a first pipe portion 23a, a bent pipe portion 23b, and a second pipe portion 23c. The bent pipe portion 23b connects the first pipe portion 23a and the second pipe portion 23c. This bent configuration allows for efficient fluid flow through the module.

The housing 10 is adapted to receive the fluid module 20 by allowing the module to be rotated around the second protrusion 22 when it is in the pivot portion 12a (**Fig. 1**). This rotational movement facilitates the mounting of the module inside the housing.

**Figure** 6 illustrates an embodiment of a fluid module 20 designed for being mounted within a connector housing 10. The fluid module 20 is composed of several components, including protrusions, fluid pipes, and a locking mechanism, which increases its functionality and allows a secure placement within the housing.

The fluid module 20 features two first protrusions 21 and two second protrusions 22. The first protrusions 21 are positioned on the sides of the module 20 and are designed to engage with corresponding first slots in the housing 10. These first protrusions 21 facilitate the guided insertion of the module 20 along a predefined path within the housing 10. The second protrusions 22 are located at the upper part of the module and are intended to engage with second slots in the housing, allowing the module to pivot during installation. This pivoting action is helpful for proper alignment and secure mounting of the module within the housing.

The fluid module 20 includes two bent fluid pipes 23, 24, each comprising a first pipe portion 23a, a second pipe portion 23c, and a bent pipe portion 23b connecting the two. The first protrusions 21 are situated on the first pipe portion 23a, while the second protrusions 22 are located on the second pipe portion 23c. This arrangement ensures that the first pipe portion 23a is received into the housing before the second pipe portion 23c during the insertion process, facilitating a smooth and controlled installation.

Additionally, the fluid module 20 is equipped with a locking means 25, which is preferably a flexible locking snap. This locking mechanism 25 is designed to secure the module within the housing once it is fully inserted and properly aligned. The flexible nature of the locking snap allows it to engage with corresponding features in the housing, providing a reliable and robust locking action that prevents unintentional dislodgement of the module.

**Figure 8** illustrates the embodiment of a connector 1 with a module 20 mounted compared to a connector of the prior art in **Fig. 7**.

The housing 10 is depicted with a generally rectangular shape, enclosing the fluid module 20. The fluid module 20 is positioned within the housing 10, specifically in a lower part of the housing. A terminal portion of the connector is shown in the upper part of Fig. 8. As can be seen, the overcall size of the connector 1 is smaller for the same number of terminals compared to a prior art connector (Fig. 7).

It is to be noted that the scope of protection is determined by the claims and is not limited by the embodiments disclosed in the above figures.

### List of reference signs

- 1: connector
- 10: housing
- 10a: back side of the housing
- 11: first slot of the housing
- 12: second slot of the housing
- 12a: pivot portion
- 20: fluid module
- 21: first protrusion
- 22: second protrusion
- 23: bent fluid pipe
- 23a: first pipe portion
- 23b: bent pipe portion
- 23c: second pipe portion
- 24: bent fluid pipe
- 25: locking means

## Claims

1. A connector (1) for automotive applications, in particular a door-to-body (DTB) connector (1), the connector (1) comprising:
a connector housing (10);
a fluid module (20) adapted to be mounted inside the housing (10),
wherein the fluid module (20) is adapted to guide fluid and comprises:
a first protrusion (21) adapted to engage with a first slot (11) of the housing (10) for guiding the module on a predefined path in the housing (10);
a second protrusion (22) adapted to engage with a second slot (12) of the housing (10) for pivoting the module,
wherein, when the module is at least partially received in the housing (10), the housing (10) and the module are adapted such that the module can be mounted inside the housing (10) by rotating the module (20) around the second protrusion (22).

2. The connector (1) of claim 1, wherein the first slot (11) comprises a curved path for guiding the first protrusion (21).

3. The connector (1) of any one of the preceding claims, wherein the first slot (11) is arranged around the periphery of the second slot (12).

4. The connector (1) of any one of the preceding claims, wherein the second slot (12) comprises a pivot portion (12a),
wherein the module is adapted such that, when the second protrusion (22) is received in the pivot portion (12a), the module can be rotated around the pivot portion (12a) such that the module can be mounted inside the housing (10).

5. The connector (1) of any one of the preceding claims, wherein the first slot (11) and the second slot (12) are configured to rotationally lock the fluid and air module within the housing (10).

6. The connector (1) of any one of the preceding claims, wherein the first slot (11) and the second slot (12) of the housing (10) and the first protrusion (21) and the second protrusion (22) of the module are dimensioned such that the module is brought into a first orientation having an angle before being received in the housing (10) with respect to an angle when mounted of at least 10°, preferably at least 20°, preferably at least 30°, preferably at least 40°, preferably at least 50°; and/or of at most 90°, preferably at most 80°, preferably at most 70°.

7. The connector (1) of any one of the preceding claims, wherein the first slot (11) and the second slot (12) of the housing (10) and the first protrusion (21) and the second protrusion (22) of the module are dimensioned such that the first protrusion engages with the first slot (11) before the second protrusion engages with the second slot (12).

8. The connector (1) of any one of the preceding claims, wherein the module comprises at least one bent fluid pipe (24) having a first pipe portion, a second pipe portion (23c) and a bent pipe portion (23b) therebetween, wherein the first protrusion (21) is arranged on the first pipe portion and the second protrusion (22) is arranged on the second pipe portion (23c),
wherein, when the module is received at least partially in the housing (10), the first pipe portion (23a) is received in the housing (10) before the second pipe portion (23c) is received in the housing (10).

9. The connector (1) of claim 8, wherein the at least one bent fluid pipe (24) is a first bent fluid pipe, and the module comprises a second bent fluid pipe arranged next to the first bent fluid pipe, wherein the first and the second bent fluid pipe are preferably integrally connected,
optionally, wherein the first pipe portion (23a) has a smaller free flow passage compared to the second pipe portion (23c).

10. The connector (1) of any one of the preceding claims, wherein the second slot (12) is substantially straight.

11. The connector (1) of any one of the preceding claims, wherein the fluid module (20) comprises locking means (25), preferably a flexible locking snap for locking the module in the housing (10).

12. The connector (1) of any one of the preceding claims, wherein the connector (1) is an electrical connector comprising a terminal portion for electrically connecting one or more terminals.

13. A fluid module (20) adapted to be mounted inside a housing (10) of a connector (1), preferably a connector (1) of any one of the preceding claims,
wherein the fluid module (20) is adapted to guide fluid and comprises:
a first protrusion (21) adapted to engage with a first slot (11) of the housing (10) for guiding the module on a predefined path in the housing (10);
a second protrusion (22) adapted to engage with a second slot (12) of the housing (10) for pivoting the module,
wherein, when the module is at least partially received in the housing (10), the module is adapted such that the module can be mounted inside the housing (10) by rotating the module about the second protrusion (22).

14. A housing (10) for a connector (1), preferably a connector (1) of any one of the preceding claims 1 to 12, the housing (10) comprising:
a first slot (11) adapted to engage with a first protrusion (21) of a fluid module (20) for guiding the fluid module (20) on a predefined path in the housing (10);
a second slot (12) adapted to engage with a second protrusion (22) of a fluid module (20) for pivoting the fluid module (20),
wherein, when a fluid module (20) is at least partially received in the housing (10), the housing (10) is adapted such that the fluid module (20) can be mounted inside the housing (10) by rotating the module about the second protrusion (22).

15. Method for assembling a connector (1) for automotive applications according to any one of the preceding claims 1 to 12, the method comprising:
providing the housing (10) and the fluid module (20);
guiding, preferably by translational movement, the module at least partially into the housing (10);
rotating the module around the second protrusion (22) for mounting the module inside the housing (10).
